# FASCICULE DE BREVET EUROPEEN

(11) **EP 2 947 628 B1**
(45) Date de publication et mention de la délivrance du brevet: **25.04.2018**
(21) Numéro de dépôt: 15167278.9
(22) Date de dépôt: 12.05.2015
(51) Int. Cl.: G06T 7/20

(54) **PROCÉDÉ DE TRAITEMENT D'INFORMATIONS LOCALES**
VERARBEITUNGSVERFAHREN VON LOKALEN INFORMATIONEN
METHOD FOR PROCESSING LOCAL INFORMATION

(30) Priorité: 21.05.2014 FR 1454556
(43) Date de publication de la demande: 25.11.2015
(73) Titulaire: Airbus Group SAS, 75016 Paris (FR)
(72) Inventeur: Chevassus, Nicolas, 92370 CHAVILLE (FR); Marraud, Denis, 92130 ISSY LES MOULINEAUX (FR); Tarault, Antoine, 75012 PARIS (FR); Perrotton, Xavier, 92320 CHATILLON (FR)

(56) Documents cités:
- WO-A1-2011/104167
- US-A1- 2008 177 411
- G.S.W. KLEIN ET AL: "Tightly integrated sensor fusion for robust visual tracking", IMAGE AND VISION COMPUTING, vol. 22, no. 10, 1 septembre 2004 (2004-09-01), pages 769-776, XP055147118, ISSN: 0262-8856, DOI: 10.1016/j.imavis.2004.02.007
- GERHARD REITMAYR ET AL: "Going out: robust model-based tracking for outdoor augmented reality", MIXED AND AUGMENTED REALITY, 2006. ISMAR 2006. IEEE/ACM INTERNATIONAL SYMPOSIUM ON, IEEE, PI, 1 octobre 2006 (2006-10-01), pages 109-118, XP031014657, ISBN: 978-1-4244-0650-0
- JIANG B ET AL: "A robust hybrid tracking system for outdoor augmented reality", VIRTUAL REALITY, 2004. PROCEEDINGS. IEEE CHICAGO, IL, USA 27-31 MARCH 2004, PISCATAWAY, NJ, USA,IEEE, US, 27 mars 2004 (2004-03-27), pages 3-275, XP010769450, DOI: 10.1109/VR.2004.1310049 ISBN: 978-0-7803-8415-6
- BLESER G ET AL: "Advanced tracking through efficient image processing and visual-inertial sensor fusion", COMPUTERS AND GRAPHICS, ELSEVIER, GB, vol. 33, no. 1, 1 février 2009 (2009-02-01), pages 59-72, XP025911718, ISSN: 0097-8493, DOI: 10.1016/J.CAG.2008.11.004 [extrait le 2008-11-21]

## Description

### DOMAINE DE L'INVENTION

La présente invention vise un procédé de traitement d'informations locales, un dispositif de mise en oeuvre d'un tel procédé et un terminal portable communiquant comportant un tel dispositif. L'invention s'applique notamment dans le domaine de l'assistance au contrôle industriel. Plus particulièrement, l'invention s'applique à l'assemblage, la maintenance ou l'installation par réalité mixte ou augmentée ainsi qu'à l'aide à la formation.

### ÉTAT DE LA TECHNIQUE

La réalité augmentée en milieu industriel exige une très grande robustesse des procédés de localisation. Actuellement, l'estimation de la position du dispositif utilisé est effectuée à l'aide de marqueurs. Cette technique permet d'avoir une certaine robustesse seulement lorsqu'un marqueur est visible. En outre, le dispositif repéré est localisé dans le référentiel du marqueur.

De plus, il existe peu de dispositifs permettant une localisation sans utilisation de marqueur. Pour avoir une localisation du dispositif robuste, les procédés existants nécessitent une étape de calibration longue et peu intuitive. Cette étape de calibration ne permet pas d'utilisation rapide du dispositif et nécessite une certaine qualification des utilisateurs.

Par ailleurs, certaines techniques de positionnement reconstruisent en temps réel l'environnement, le SLAM (ou « Simultaneous Localization And Mapping » en terminologie anglo-saxonne) par exemple. On a donc une localisation par rapport à un environnement reconstruit. Ceci présente plusieurs inconvénients. Tout d'abord, il n'est pas possible de détecter de différences entre ce qui a été construit et ce qui a été dessiné. De plus, l'environnement reconstruit peut comporter des erreurs de détection d'éléments par exemple. Ainsi, cette technique manque de fiabilité surtout dans le domaine de la maintenance ou lorsque l'on souhaite une grande précision.

Les dispositifs utilisant la réalité augmentée sont, le plus souvent, des dispositifs permettant l'affichage d'informations en superposition sur une image ou vidéo.

On connaît dans l'état de la technique la demande de brevet européen EP 2201532 qui décrit un dispositif de positionnement local configuré pour déterminer la position relative du dispositif par rapport à un objet cible. Le dispositif est monté sur une rotule pilotée et graduée fixée sur un trépied. La rotule permet de déterminer l'azimut et l'angle d'élévation qui doivent être entrés manuellement afin de définir la position du dispositif. Ce dispositif est donc difficile à positionner et à déplacer en milieu industriel.

L'article De G. Klein et T. Drummond "Tighlty intergrated sensor fusion for robust visual tracking" décrit un procédé de suivi d'objet basé sur la corrélation d'images acquises avec une représentation virtuelle de l'objet et de données inertielles. Le résultat du suivi est ensuite utilisé dans une application de réalité augmentée dans laquelle l'image captée et une partie de la représentation virtuelle sont affichées conjointement.

### OBJET DE L'INVENTION

La présente invention vise à remédier à tout ou partie de ces inconvénients. A cet effet, selon un premier aspect, la présente invention vise un procédé tel que décrit dans la revendication 1.

L'utilisation d'un environnement virtuel réalisé a priori permet de localiser le dispositif dans le repère de la représentation virtuelle. Contrairement à une reconstruction, la représentation permet de détecter les éléments manquants sur les éléments de l'environnement réel. Les informations analysées ont une plus grande fiabilité. L'environnement virtuel peut aussi être modifié en fonction des observations faites sur l'environnement réel.

L'étape de corrélation peut être effectuée à partir d'une analyse d'image ne nécessitant pas d'objet cible. En outre, le dispositif effectuant le procédé de l'invention n'est pas fixe et est facilement déplaçable en milieu industriel.

Dans des modes de réalisation, l'étape de détermination du déplacement comporte les étapes suivantes:
- estimation d'un mouvement par la centrale inertielle,
- estimation d'un mouvement relatif entre les images captées à un instant et les images captées à un instant ultérieur et
- combinaison des estimations de mouvement.

Ces modes de réalisation présentent l'avantage d'avoir une position la plus précise possible. L'estimation du mouvement relatif entre deux images captées ainsi que l'estimation du mouvement de la centrale inertielle minimisent une erreur d'estimation de la position. Effectivement, les environnements industriels pouvant être visuellement ambigus, la détermination de la localisation par corrélation peut produire des erreurs entre deux situations similaires. L'estimation des deux autres mouvements permet d'éviter des changements brusques de localisation. Le procédé est donc plus robuste.

Dans des modes de réalisation, au cours de l'étape de localisation du dispositif, la corrélation est effectuée par reconnaissance dans au moins une image captée de structures sémantiques discriminantes prédéfinies dans la représentation virtuelle.

Cette reconnaissance a l'avantage d'accroître la robustesse du procédé. En effet, plus il y a de structures sémantiques discriminantes dans l'image captée, plus le procédé est précis.

Dans des modes de réalisation, le procédé objet de la présente invention, comporte une étape d'atténuation du déplacement déterminé au cours de l'étape de détermination du déplacement.

Ces modes de réalisation ont l'avantage d'avoir une localisation précise en cas de perte momentanée de l'image ou si l'image est inexploitable. L'utilisateur ne doit pas attendre de stabiliser le dispositif pour connaître sa position par rapport au référentiel de la représentation virtuelle. L'utilisateur est donc plus efficace. Aussi, cela permet d'atténuer les micromouvements que peut subir le dispositif. Le procédé objet de la présente invention, comporte une étape d'affichage conjoint d'une image captée et d'une partie de la représentation virtuelle correspondant à l'image captée affichée.

L'avantage de ces modes de réalisation est une meilleure visualisation des différences entre la représentation virtuelle et l'environnement réel. L'utilisateur est donc plus efficace. Le procédé objet de la présente invention, comporte une étape d'édition d'informations localisées sur la représentation virtuelle.

L'avantage de ces modes de réalisation est d'avoir des informations précisément localisées. De plus, les informations étant enregistrées sur la représentation virtuelle, elles sont aisément transférées et accessibles. Les informations enregistrées lors d'utilisations précédentes du dispositif sont accessibles et modifiable.

Selon un deuxième aspect, la présente invention vise un dispositif tel que décrit dans la revendication 7.

Les avantages, buts et caractéristiques particuliers du dispositif objet de la présente invention étant similaires à ceux du procédé objet de la présente invention, ils ne sont pas rappelés ici.

Dans des modes de réalisation, le dispositif objet de la présente invention, comporte un moyen d'affichage configuré pour afficher conjointement une image captée et une partie de la représentation virtuelle correspondant à l'image captée affichée.

Ces modes de réalisation présentent l'avantage de comparer l'environnement réel à la représentation virtuelle afin de détecter des anomalies.

Dans des modes de réalisation, le dispositif objet de la présente invention, comporte un moyen d'édition d'informations localisées sur la représentation virtuelle.

L'avantage de ces modes de réalisation est la possibilité de création et de modification d'annotations précisément localisées directement sur la représentation virtuelle.

Selon un troisième aspect, la présente invention vise un terminal portable communiquant comportant un dispositif objet de la présente invention.

Grâce à ces dispositions, l'invention est compacte et aisément transportable dans les milieux industriels, qui sont souvent difficiles d'accès.

### BRÈVE DESCRIPTION DES FIGURES

D'autres avantages, buts et caractéristiques de l'invention ressortiront de la description non-limitative qui suit d'au moins un mode de réalisation particulier du procédé et du dispositif de traitement d'informations locales, et du terminal portable communiquant comportant un tel dispositif, en regard des dessins annexés, dans lesquels :
- la figure 1 représente, sous forme de logigramme, un mode de réalisation du procédé objet de la présente invention,
- la figure 2 représente, schématiquement, un mode de réalisation du dispositif objet de la présente invention.
- la figure 3 représente, schématiquement, un mode de réalisation du terminal portable communiquant objet de la présente invention.

### DESCRIPTION D'EXEMPLES DE REALISATION DE L'INVENTION

On note, dès à présent, que les figures ne sont pas à l'échelle.

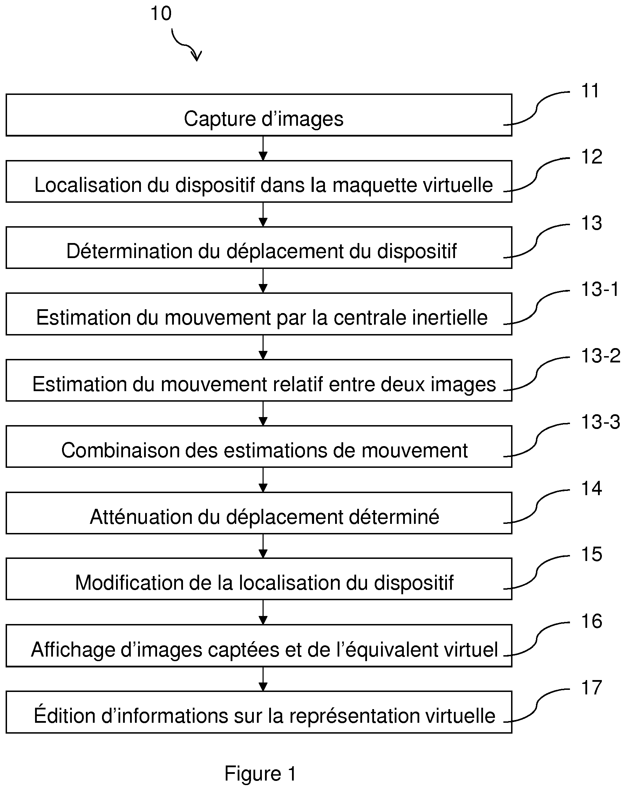

On observe sur la figure 1, un mode de réalisation particulier du procédé 10, objet de la présente invention, qui comporte :
- une étape 11 de capture d'images représentatives de l'environnement réel,
- une étape 12 de localisation d'un dispositif dans une maquette virtuelle correspondant à la localisation du dispositif dans l'environnement réel,
- une étape 13 de détermination du déplacement du dispositif comportant trois sous-étapes :
   - une étape 13-1 d'estimation du mouvement par la centrale inertielle,
   - une étape 13-2 d'estimation du mouvement relatif entre les images captées à un instant et les images captées à un instant ultérieur,
   - une étape 13-3 de combinaison des estimations de mouvements déterminées aux étapes 13-1 et 13-2 déterminant un déplacement du dispositif,
- une étape 14 d'atténuation du déplacement déterminé,
- une étape 15 de modification de la position du dispositif dans la représentation virtuelle en fonction du déplacement déterminé,
- une étape 16 d'affichage conjoint d'images captées et d'une partie de la représentation virtuelle correspondant à l'image captée affichée et
- une étape 17 d'édition d'informations localisées sur la représentation virtuelle.

L'étape 11 est effectuée au moyen d'un dispositif de capture d'images. Le dispositif de capture d'images est, par exemple, une caméra, un appareil photo ou un scanner. Dans la suite de la description, « caméra » désigne un dispositif de capture d'images. La caméra peut être de type monoculaire, stéréoscopique, RGB-D ou plénoptique. La caméra effectuant la capture d'images à l'étape 11 peut être utilisée selon deux modes :
- le mode vidéo permettant une prise de vue en continu et
- le mode image fixe configuré pour l'analyse plus approfondie de certains plans, lorsque la prise de vue est difficile par exemple.

Le mode vidéo peut inclure une sous-étape de traitement de la qualité d'une image par stabilisation, débruitage, et super-résolution. Cette étape est utilisée lors de vues locales détaillées par exemple.

Le mode image fixe se différencie du mode vidéo par l'absence de contrainte temporelle. L'image peut être de meilleure qualité et il est possible de mettre en oeuvre une stratégie de localisation globale en optimisant la localisation de l'ensemble des images. Par exemple, en prenant en compte la connaissance de certaines caractéristiques de la prise de vue, tels les caractéristiques de panoramas par exemple.

L'étape 12 est une étape de calibration. Lors de sa création, des structures sémantiques discriminantes sont désignées dans la représentation virtuelle. La représentation virtuelle peut être une maquette numérique aussi appelée « Digital MockUp » en terminologie anglo-saxonne ou DMU. La maquette numérique est préférentiellement réalisée au moyen de logiciels de conception assistée par ordinateur (CAO). La représentation virtuelle peut inclure : des informations d'assemblage ou d'inspection, des tests et mesures, des annotations, des éléments à contrôler, des non-conformités. Les informations peuvent être de différents types :
- texte tels des métadonnées associées aux objets de la scène par exemple,
- image,
- géométrie,
- vidéo ou,
- scan 3D qui peut être acquis sur les objets de la scène lors d'une utilisation antérieure.

Préférentiellement, la représentation virtuelle est une simplification de la maquette numérique brute, réalisée lors de la conception de l'objet représenté. La maquette numérique brute est filtrée et organisée afin de :
- sélectionner les objets pertinents pour la tâche à réaliser,
- extraire des métadonnées à afficher ou éditer,
- organiser des données de simplification des géométries et
- définir les structures sémantiques discriminantes par un procédé d'analyse automatique des structures géométriques présentes dans la maquette numérique.

Préférentiellement, ces structures sémantiques discriminantes :
- minimisent l'ambiguïté naturelle de la scène,
- maximisent leur probabilité de détection,
- prennent éventuellement en compte des structures de référence.

Les structures sémantiques discriminantes prennent en compte des structures de références lorsque les contraintes de tolérance l'imposent. Dans ce cas, les structures sémantiques discriminantes sont sélectionnées exclusivement sur les éléments de référence.

Les structures sémantiques discriminantes sont préférentiellement des structures géométriques de type points, lignes, cercles, ellipses, surfaces, volumes paramétrés, des éléments riches en texture, ou des contours.

Les structures sémantiques discriminantes peuvent être :
- des amers visuels multimodaux et non-ambigus,
- des mires de calibration facilement détectables.

Le terme multimodal signifie qu'ils correspondent à des primitives extraites des différentes images disponibles, quelle qu'en soit la nature. La non-ambiguité est définie comme correspondant à des configurations ou des descriptions uniques dans un voisinage proche.

Les amers visuels permettent une calibration sans intervention d'utilisateur. Les mires de calibration nécessitent l'intervention d'un utilisateur qui doit localiser la mire approximativement dans la représentation virtuelle. La mire peut être positionnée sur une surface pour définir une normale à la surface. L'utilisateur peut reproduire la normalité et le positionnement rapidement dans la représentation virtuelle.

De plus, un ajout ultérieur de mires localisées automatiquement sur la représentation numérique permet d'accroitre encore la robustesse du procédé et la précision de la position du dispositif dans la représentation numérique. La localisation est automatique lorsque que la nouvelle mire positionnée est captée par la caméra dans une image comportant au moins une structure sémantique déjà référencée.

Après la localisation de la première mire, une corrélation entre les systèmes sémantiques discriminants des images captées et ceux de la représentation virtuelle est effectuée

Préférentiellement, la corrélation est effectuée à partir des contours extraits de la représentation virtuelle qui sont ensuite alignés aux contours extraits de l'image. Ceci permet une réduction de la dérive lors d'une utilisation en mode vidéo.

L'étape 12 d'initialisation peut être totalement automatisée si le nombre d'amers visuels est suffisant pour ne pas avoir à placer une mire. De plus, la sélection des amers ou mires à extraire peut être effectuée selon différents critères : la proximité d'un objet d'intérêt repéré dans la représentation virtuelle ou la dimension des amers ou des mires, par exemple.

Lors de l'étape 12 de localisation, la position initiale de la centrale inertielle est définie.

L'étape 13 de détermination du déplacement peut être effectuée en trois sous-étapes, 13-1, 13-2 et 13-3.

L'étape 13-1 d'estimation du mouvement par la centrale inertielle, est une étape de calcul du déplacement entre la position initiale de la centrale inertielle définie à l'étape 12 et la position estimée de la centrale inertielle après déplacement du dispositif.

L'étape 13-2 d'estimation du mouvement relatif entre les images captées à un instant et les images captées à un instant ultérieur, est une étape de traitement d'image. Plus particulièrement, une reconnaissance des structures sémantiques est effectuée dans les deux images. En comparant les positions de ces structures dans l'image, on peut déterminer une estimation du mouvement du dispositif.

L'étape 13-2 peut être itérative et exploite les capacités de la représentation virtuelle, par exemple un rendu de texture, une carte de profondeurs, une carte des normales. Préférentiellement, l'étape est un appariement des primitives 3D extraites des rendus précédemment cités à des primitives 2D ou 3D extraites de l'image acquise par la caméra. La sélection des primitives 3D visibles est gérée de manière intrinsèque et une étape de préparation de modèle est évitée.

L'étape 13-3 de combinaison des estimations de mouvements déterminées aux étapes 13-1 et 13-2 détermine un déplacement du dispositif. Préférentiellement, une estimation de la position utilisant la corrélation de l'étape 12 est combinée aux estimations de mouvement pour déterminer la position du dispositif à un instant ultérieur.

Un niveau de confiance peut être attribué à chaque estimation. La détermination du déplacement est préférentiellement effectuée par pondération des estimations par les niveaux de confiance correspondant. Le procédé est donc plus robuste et précis. Par exemple, lorsque l'image est floue, le niveau de confiance attribué à l'estimation de la position par corrélation est faible.

L'étape 13-3 est configurée pour :
- limiter l'effort de recalage en réduisant le nombre d'amers de référence, et donc le nombre de primitives définies à l'étape 13-2,
- accroître la robustesse du ré-accrochage en cas de perte momentanée du recalage visuel si la caméra est masquée par exemple.

L'étape 14 d'atténuation du déplacement déterminé à l'étape 13-3 est configurée pour atténuer l'impression de flottement entre la représentation virtuelle et les images captées. L'étape 14 peut être un filtrage des données de rotation et de translation issues de la centrale inertielle. Par exemple, l'estimation du mouvement par la centrale inertielle est filtrée pour minimiser l'impact des vibrations ou petits mouvements dus à l'utilisateur. Selon le mode de sélection des structures sémantiques, les petits mouvements peuvent être atténués tout en conservant un alignement sur les points d'intérêt de l'image.

L'étape 15 de modification de la position du dispositif dans la représentation virtuelle en fonction du déplacement déterminé, est configurée pour actualiser précisément la position du dispositif en fonction du déplacement déterminé à l'étape 13-3 et atténué à l'étape 14.

L'étape 16, d'affichage conjoint d'images captées et d'une partie de la représentation virtuelle correspondant à l'image captée affichée, utilise la position et l'orientation du dispositif, modifiée à l'étape 15 et localisée dans le référentiel de la représentation virtuelle, pour définir la partie de la représentation virtuelle à afficher. L'affichage conjoint peut être un affichage en :
- juxtaposition, dans lequel les images sont placées l'une à côté de l'autre, afin de permettre une comparaison par exemple ou,
- en superposition dans lequel la représentation virtuelle est en transparence, afin d'avoir l'affichage des informations ajoutées à la maquette numérique brute et liées au processus industriel.

L'affichage peut être :
- en vue globale qui est une vue en champ large afin d'avoir une vision globale de la scène à analyser,
- en vue locale qui est une vue détaillée ou un zoom d'une partie d'une vue globale, la vue locale étant indiquée dans une vue globale.

L'étape 17 d'édition d'informations localisées sur la représentation virtuelle est effectuée à partir de l'affichage des informations réalisé à l'étape 16. Des informations précisément localisées peuvent être associées automatiquement ou manuellement à la représentation virtuelle. Ces informations sont par exemple fournies par :
- l'opérateur, tel une indication de non-conformité dans l'environnement réel par exemple,
- la camera, tel une photo, une vidéo, ou un scan 3D par exemple,
- un dispositif externe permettant par exemple une mesure de pression, de température, de niveau d'éclairement.

Ces informations sont enregistrées dans la représentation virtuelle et peuvent servir pour une utilisation ultérieure. Ces informations peuvent être éditées pour rendre compte d'une évolution d'une situation locale par exemple, telle la correction d'une non-conformité, par exemple.

L'étape d'édition peut aussi être un contrôle par l'utilisateur de l'alignement local. Ce contrôle est préférentiellement effectué au moyen de l'affichage en superposition défini précédemment. Préférentiellement, la position de la représentation virtuelle est transparente et l'alignement est effectué à partir d'une image fixe. L'opérateur peut déplacer une position ponctuelle en 3D sans remettre en cause l'alignement global. L'utilisateur peut aligner précisément le réel sur le virtuel grâce à un zoom centré sur le point à aligner.

Le procédé 10 est effectué au moyen d'un dispositif 20.

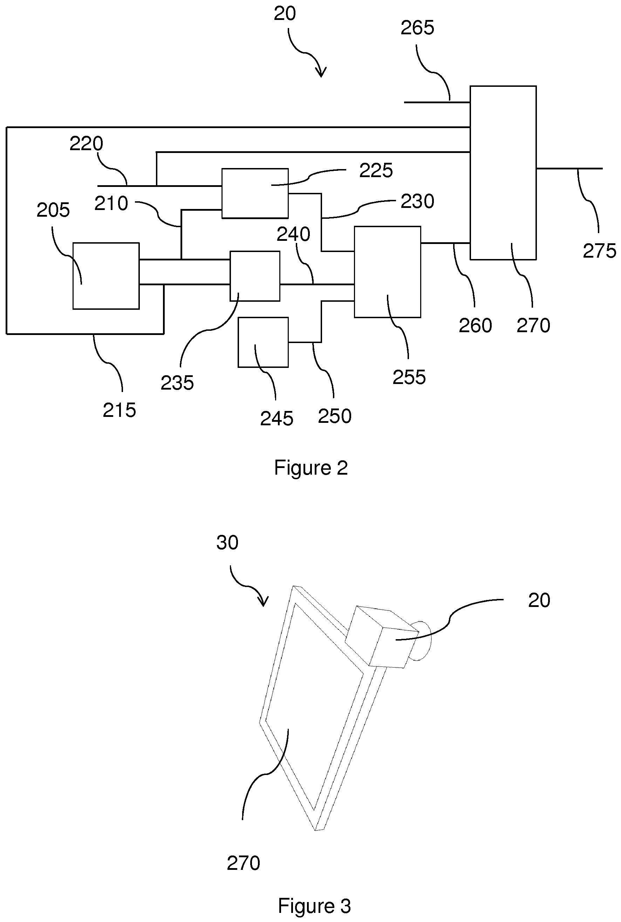

On observe sur la figure 2, un mode de réalisation particulier du dispositif 20, objet de la présente invention.

Une caméra 205 capte une image 210 et une image 215 ultérieure à l'image 210. Les images 210 et 215 représentent un environnement réel. L'image 210 est transmise à un dispositif 225. Le dispositif 225 prend aussi en compte une représentation virtuelle 220 de l'environnement réel. Le dispositif 225 extrait des structures sémantiques discriminantes de la représentation virtuelle et de l'image capturée et effectue une corrélation configurée pour obtenir une localisation 230 du dispositif dans le référentiel de la représentation numérique selon l'étape 12 du procédé 10. Le dispositif 225 est un microprocesseur, par exemple.

L'image 210 est aussi transmise avec l'image 215 à un dispositif 235. Le dispositif 235 extrait les structures sémantiques discriminantes des deux images et les compare pour en déduire une estimation du mouvement que le dispositif 20 a effectué entre l'instant où l'image 210 a été captée et l'instant ultérieur où l'image 215 a été captée. Le dispositif 235 est par exemple un microprocesseur qui effectue l'estimation selon l'étape 13-2 du procédé 10. L'information 240 est l'estimation du mouvement du dispositif 20 en sortie du dispositif 235.

Une centrale inertielle 245 est initialisée lorsque l'image 210 est captée. La centrale inertielle donne une information 250 d'estimation de mouvement à un dispositif 255 conformément à l'étape 13-1 du procédé 10.

Le dispositif 255 peut être un microprocesseur. Le dispositif 255 prend en compte l'information 230 de localisation initiale du dispositif 20 et, en fonction des estimations de mouvement 240 et 250, transmet un signal 260 correspondant à la nouvelle position du dispositif 20 dans la représentation virtuelle. Le dispositif 255 réalise les étapes 13-3, 14 et 15 du procédé 10.

Un dispositif 270 est un dispositif d'affichage. Le dispositif 270 affiche conjointement l'image 215 et la représentation virtuelle 220 à la position 260 correspondant à l'image 215. Le dispositif 270 peut aussi prendre en compte une information 265 qui doit être éditée sur la représentation virtuelle. L'information 275 en sortie du dispositif 270 est la représentation virtuelle éditée.

On observe sur la figure 3, un mode de réalisation particulier du terminal portable communiquant 30, objet de la présente invention.

Le terminal portable communiquant 30 comporte un écran d'affichage 270 relié au reste du dispositif 20. Le terminal portable communiquant 30 est préférentiellement :
- une tablette numérique,
- un dispositif de type « smartphone »,
- des lunettes,
- un casque ou,
- un ordinateur.

## Revendications

1. Procédé (10) de traitement d'informations locales acquises au moyen d'une représentation virtuelle (220) et d'un dispositif (20) comportant une centrale inertielle (245) et un capteur d'images (205), le procédé comportant les étapes suivantes:
- capture (11) d'au moins une image (210) d'un environnement réel du dispositif,
- localisation (12) du dispositif dans la représentation virtuelle, correspondant à la localisation du dispositif dans l'environnement réel, par corrélation de parties d'une image captée et de parties de la représentation virtuelle, la corrélation étant effectuée par reconnaissance automatique dans au moins une image captée (210) d'amers visuels, multimodaux et non-ambigus, prédéfinis dans la représentation virtuelle (220),
- détermination (13) du déplacement du dispositif au moins au moyen de la centrale inertielle et
- modification (15) de la localisation du dispositif dans la représentation virtuelle en fonction du déplacement déterminé par la centrale inertielle pour que la position réelle du dispositif corresponde, pendant le déplacement, à la localisation du dispositif dans la représentation virtuelle,
- affichage (16) conjoint d'au moins une image captée (210) et d'une partie de la représentation virtuelle (220) correspondant à l'image captée affichée, **caractérisé en ce qu'**il comporte
- modification de la représentation virtuelle (220) par édition (17) d'informations localisées (265) provenant d'un dispositif externe fournissant une mesure de pression, de température, de niveau d'éclairement, sur la représentation virtuelle (220).

2. Procédé (10) de traitement d'informations locales selon la revendication 1, dans lequel, l'étape (13) de détermination du déplacement comporte les étapes suivantes :
- estimation (13-1) d'un mouvement par la centrale inertielle,
- estimation (13-2) d'un mouvement relatif entre les images captées à un instant et les images captées à un instant ultérieur et
- combinaison (13-3) des estimations de mouvement.

3. Procédé de traitement d'informations locales selon l'une des revendications 1 ou 2, qui comporte une étape (14) d'atténuation du déplacement déterminé au cours de l'étape (13) de détermination du déplacement.

4. Procédé de traitement d'informations locales selon l'une des revendications 1 à 3, dans lequel l'étape d'affichage (16) est un affichage en superposition.

5. Procédé de traitement d'informations locales selon la revendication 4, dans lequel l'affichage de la représentation virtuelle (220) est effectué en transparence.

6. Procédé de traitement d'informations locales selon l'une quelconque des revendications 1 à 5, comportant une étape d'enregistrement des informations localisées (265) dans la représentation virtuelle (220) pour rendre compte d'une évolution d'une situation locale, telle la correction d'une non-conformité.

7. Dispositif (20) de traitement d'informations locales qui comporte :
- un capteur d'images (205), qui fournit au moins une image (210) de l'environnement réel du dispositif,
- un moyen d'accès à une représentation virtuelle (220),
- un moyen de localisation (225) du dispositif dans la représentation virtuelle, correspondant à la localisation du dispositif dans l'environnement réel, par corrélation de parties d'une image captée et de parties de la représentation virtuelle, la corrélation étant effectuée par reconnaissance automatique dans au moins une image captée (210) d'amers visuels, multimodaux et non-ambigus, prédéfinis dans la représentation virtuelle (220),
- une centrale inertielle (245) qui détermine un déplacement (250) du dispositif et,
- un moyen de modification (255) de la localisation du dispositif dans la représentation virtuelle en fonction du déplacement déterminé par la centrale inertielle pour que la position réelle du dispositif corresponde, pendant le déplacement, à la localisation du dispositif dans la représentation virtuelle,
- un moyen d'affichage (270) configuré pour afficher conjointement une image captée (210) et une partie de la représentation virtuelle (220) correspondant à l'image captée affichée,
**caractérisé en ce qu'**il comporte :
- un moyen de modification de la représentation virtuelle (220) par édition d'informations localisées (265) provenant d'un dispositif externe fournissant une mesure de pression, de température, de niveau d'éclairement, sur la représentation virtuelle (220).

8. Dispositif (20) de traitement d'informations locales selon la revendication 7, comportant un moyen d'enregistrement des informations localisées (265) dans la représentation virtuelle (220) pour rendre compte d'une évolution d'une situation locale, telle la correction d'une non conformité.

9. Terminal portable communiquant (30) **caractérisé en ce qu'**il comporte un dispositif (20) selon l'une des revendications 7 à 8.

## Patentansprüche

1. Verfahren (10) zur Verarbeitung lokaler Informationen, die mittels einer virtuellen Darstellung (220) und einer Vorrichtung (20) gewonnen werden, die ein Trägheitsnavigationssystem (245) und einen Bildsensor (205) aufweist, wobei das Verfahren die folgenden Schritte aufweist:
- Erfassen (11) mindestens eines Bilds (210) einer realen Umgebung der Vorrichtung,
- Lokalisieren (12) der Vorrichtung in der virtuellen Darstellung, entsprechend der Lokalisierung der Vorrichtung in der realen Umgebung, durch Korrelation von Teilen eines erfassten Bilds und Teilen der virtuellen Darstellung, wobei die Korrelation durch automatische Erkennung von in der virtuellen Darstellung (220) vordefinierten visuellen, multimodalen und unzweideutigen Landmarken in mindestens einem erfassten Bild (210) ausgeführt wird,
- Bestimmen (13) der Verschiebung der Vorrichtung mindestens mittels des Trägheitsnavigationssystems, und
- Ändern (15) der Lokalisierung der Vorrichtung in der virtuellen Darstellung abhängig von der durch das Trägheitsnavigationssystem bestimmten Verschiebung, damit die reale Stellung der Vorrichtung während der Verschiebung der Lokalisierung der Vorrichtung in der virtuellen Darstellung entspricht,
- gemeinsame Anzeige (16) mindestens eines erfassten Bilds (210) und eines Teils der dem angezeigten erfassten Bild entsprechenden virtuellen Darstellung (220),
**dadurch gekennzeichnet, dass** es aufweist
- Ändern der virtuellen Darstellung (220) durch Ausgabe (17) lokalisierter Informationen (265), die von einer externen Vorrichtung kommen, welche eine Druck-, Temperatur-, Beleuchtungspegelmessung auf der virtuellen Darstellung (220) liefert.

2. Verfahren (10) zur Verarbeitung lokaler Informationen nach Anspruch 1, wobei der Schritt (13) der Bestimmung der Verschiebung die folgenden Schritte aufweist:
- Schätzung (13-1) einer Bewegung durch das Trägheitsnavigationssystem,
- Schätzung (13-2) einer relativen Bewegung zwischen den zu einem Zeitpunkt erfassten Bildern und den zu einem späteren Zeitpunkt erfassten Bildern, und
- Kombination (13-3) der Bewegungsschätzungen.

3. Verfahren zur Verarbeitung lokaler Informationen nach einem der Ansprüche 1 oder 2, das einen Schritt (14) der Minderung der bestimmten Verschiebung während des Schritts (13) der Bestimmung der Bewegung aufweist.

4. Verfahren zur Verarbeitung lokaler Informationen nach einem der Ansprüche 1 bis 3, wobei der Anzeigeschritt (16) eine Überlagerungsanzeige ist.

5. Verfahren zur Verarbeitung lokaler Informationen nach Anspruch 4, wobei die Anzeige der virtuellen Darstellung (220) transparent ausgeführt wird.

6. Verfahren zur Verarbeitung lokaler Informationen nach einem der Ansprüche 1 bis 5, das einen Schritt der Aufzeichnung der lokalisierten Informationen (265) in der virtuellen Darstellung (220) aufweist, um eine Entwicklung einer lokalen Situation wie die Korrektur einer Nichtübereinstimmung abzubilden.

7. Vorrichtung (20) zur Verarbeitung lokaler Informationen, die aufweist:
- einen Bildsensor (205), der mindestens ein Bild (210) der realen Umgebung der Vorrichtung liefert,
- eine Zugangseinrichtung zu einer virtuellen Darstellung (220),
- eine Einrichtung zur Lokalisierung (225) der Vorrichtung in der virtuellen Darstellung, die der Lokalisierung der Vorrichtung in der realen Umgebung entspricht, durch Korrelation von Teilen eines erfassten Bilds und von Teilen der virtuellen Darstellung, wobei die Korrelation durch automatische Erkennung von in der virtuellen Darstellung (220) vordefinierten visuellen, multimodalen und unzweideutigen Landmarken in mindestens einem erfassten Bild (210) ausgeführt wird,
- ein Trägheitsnavigationssystem (245), das eine Verschiebung (250) der Vorrichtung bestimmt, und
- eine Einrichtung zur Änderung (255) der Lokalisierung der Vorrichtung in der virtuellen Darstellung abhängig von der durch das Trägheitsnavigationssystem bestimmten Verschiebung, damit die reale Stellung der Vorrichtung während der Verschiebung der Lokalisierung der Vorrichtung in der virtuellen Darstellung entspricht,
- eine Anzeigeeinrichtung (270), die konfiguriert ist, ein erfasstes Bild (210) und einen Teil der dem angezeigten erfassten Bild entsprechenden virtuellen Darstellung (220) zusammen anzuzeigen,
**dadurch gekennzeichnet, dass** sie aufweist:
- eine Einrichtung zur Änderung der virtuellen Darstellung (220) durch Ausgabe von lokalisierten Informationen (265), die von einer externen Vorrichtung kommen, die eine Druck-, Temperatur-, Beleuchtungspegelmessung auf der virtuellen Darstellung (220) liefert.

8. Vorrichtung (20) zur Verarbeitung lokaler Informationen nach Anspruch 7, die eine Einrichtung zur Aufzeichnung der lokalisierten Informationen (265) in der virtuellen Darstellung (220) aufweist, um eine Entwicklung einer lokalen Situation wie die Korrektur einer Nichtübereinstimmung abzubilden.

9. Kommunizierendes tragbares Endgerät (30), **dadurch gekennzeichnet, dass** es eine Vorrichtung (20) nach einem der Ansprüche 7 bis 8 aufweist.

## Claims

1. Method (10) for processing local information acquired by means of a virtual representation (220) and of a device (20) having an inertial unit (245) and an image sensor (205), the method having the following steps:
- capture (11) of at least one image (210) of a real environment of the device,
- localization (12) of the device in the virtual representation, corresponding to the localization of the device in the real environment, by correlation of portions of a captured image and portions of the virtual representation, the correlation being performed by automatic recognition, in at least one captured image (210), of visual, multimodal and nonambigous seamarks that are predefined in the virtual representation (220),
- determination (13) of the displacement of the device at least by means of the inertial unit, and
- modification (15) of the localization of the device in the virtual representation as a function of the displacement determined by the inertial unit so that the real position of the device corresponds, during the displacement, to the localization of the device in the virtual representation,
- joint display (16) of at least one captured image (210) and a portion of the virtual representation (220) corresponding to the displayed captured image, **characterized in that** it involves
- modification of the virtual representation (220) by editing (17) of localised information (265) from an external device providing a measure of pressure, temperature, lighting level, on the virtual representation (220).

2. Method (10) for processing local information according to Claim 1, in which step (13) of determination of the displacement has the following steps:
- estimation (13-1) of a movement by the inertial unit,
- estimation (13-2) of a relative movement between the images captured at one instant and the images captured at a later instant, and
- combination (13-3) of the movement estimations.

3. Method for processing local information according to either of Claims 1 and 2, which has a step (14) of decrease of the displacement determined in the course of step (13) of determination of the displacement.

4. Method for processing local information according to one of Claims 1 to 3, in which the step of display (16) is superimposed display.

5. Method for processing local information according to Claim 4, in which the virtual representation (220) is displayed transparently.

6. Method for processing local information according to any one of Claims 1 to 5, having a step of recording of the localised information (265) in the virtual representation (220) to take account of a change in a local situation, such as the correction of a nonconformity.

7. Device (20) for processing local information that has:
- an image sensor (205), which provides at least one image (210) of the real environment of the device,
- a means for accessing a virtual representation (220),
- a means (225) for localizing the device in the virtual representation, corresponding to the localization of the device in the real environment, by correlation of portions of a captured image and portions of the virtual representation, the correlation being performed by automatic recognition, in at least one captured image (210), of visual, multimodal and nonambiguous seamarks that are predefined in the virtual representation (220),
- an inertial unit (245) that determines a displacement (250) of the device, and
- a means (255) for modifying the localization of the device in the virtual representation as a function of the displacement determined by the inertial unit so that the real position of the device corresponds, during the displacement, to the localization of the device in the virtual representation,
- a display means (270) configured to jointly display a captured image (210) and a portion of the virtual representation (220) corresponding to the displayed captured image,
**characterized in that** it has:
- a means for modifying the virtual representation (220) by editing of localised information (265) from an external device providing a measure of pressure, temperature, lighting level, on the virtual representation (220).

8. Device (20) for processing local information according to Claim 7, having a means for recording of the localised information (265) in the virtual representation (220) to take account of a change in a local situation, such as the correction of a nonconformity.

9. Communicating portable terminal (30), **characterized in that** it has a device (20) according to either of Claims 7 and 8.
